Europäisches Patentamt

European Patent Office

Office européen des brevets

(19)

(11) Publication number: **0 003 498**
**B1**

(12) **EUROPEAN PATENT SPECIFICATION**

(45) Date of publication of patent specification: **16.09.81**

(51) Int. Cl.³: **B 60 B  7/00, B 62 J  5/20**

(21) Application number: **79100044.1**

(22) Date of filing: **08.01.79**

(54) Decorative safety member for spoked wheels.

(43) Date of publication of application:
**22.08.79 Bulletin 79/17**

(45) Publication of the grant of the European patent:
**16.09.81 Bulletin 81/37**

(84) Designated Contracting States:
**DE NL**

(56) References cited:
**FR - A - 2 258 276**
**IT - A - 527 981**
**US - A - 2 621 081**
**US - A - 3 082 041**
**US - A - 3 924 928**

(73) Proprietor: **Trimble, Robert C.**
**Northboro Mass (US)**

(72) Inventor: **Trimble, Robert C.**
**Northboro Mass (US)**

(74) Representative: **Hemmerich, Friedrich Werner et al,**
**Patentanwälte HEMMERICH-MÜLLER-GROSSE-POLLMEIER Berliner Allee 41**
**D-4000 Düsseldorf 1 (DE)**

## Decorated safety member for spoked wheels

Decorative and safety wheel tubular member, particularly adapted for insertion between the spokes of bicycles, motorcycles and the like comprising an elongated tubular flexible member of a diameter to engage the inner portions of the spokes of the wheel adjacent the rim and of a length to close on itself within the wheel and around the hub thereof, with means such as a plug or sleeve to hold the ends of the member together in abutting relationship. A narrow strip of material having a reflective outer surface is provided in spiral fashion on the outer surface of the elongated member such that when a wheel carrying the elongated member is rotated at a low speed, the elongated member appears to an observer from substantially any position to have its entire outer surface covered with reflective material.

The present invention relates to a decorative safety attachment for vehicle spoke wheels.

The present invention is an improvement over my U.S. Patent No. 3,834,765 issued September 10, 1974.

Heretofore, decorative reflective devices for vehicles having spoke wheels have generally been in the form of small faceted glass devices permanently mounted by means of screws and the like to fenders, frame or rim of the wheels of the vehicle. Devices of this type are small, are limited in reflection value and tend to give a false sense of security inasmuch as the drivers of other vehicles have difficulty seeing the small devices or see them too late to avoid a collision. The known reflective devices used for this purpose are effective only over a narrow angle of view and are generally totally ineffective when viewed from the side of vehicles rather than from the front or the back. Thus, they are subject to the particular disadvantage of being ineffective in signaling vehicles approaching at right angles.

In my aforementioned U.S. Patent No. 3,834,765, the contents of which are incorporated herein as if set out at length, is disclosed a flexible tubular member having a light reflective outer surface and of a diameter to engage the inner portions of the spokes of a spoked wheel adjacent the rim of the wheel and of a length to close on itself within the wheel. Means are provided to hold the ends of the member together after the member has been introduced between the spokes.

I have found that the effectiveness of the tubular member shown and described in my aforementioned U.S. Patent No. 3,834,765 is subject to various disadvantages. For example, its effectiveness is adversely affected by the entry of water and the like. Further, the entire outer surface of the tubular member must preferably be of a light reflective nature and where the entire tubular member or its entire outer surface merely contains a fluorescent dye, visibility is reduced, especially under night conditions where maximum visibility should exist.

The primary aim of the present invention is to provide an improved decorative safety attachment that may be readily attached to a spoke wheel without structurally altering the wheel, interfering with its use or servicing thereof, or requiring the use of any attaching means such as clamps, screws and the like.

Another aim is to provide such an attachment which is of simple construction, strong, durable, lightweight, attractive in appearance, unbreakable, easily cleaned, and which may be manufactured at low cost.

A still further aim is to provide such an attachment which is not affected by either rotation or vibration of the spoke wheel to which it is attached.

According to the invention, there is provided a decorative safety attachment for vehicle spoke wheels having a central elongated hub, a rim adapted to receive a tire and spokes all connected at once to the rim around its periphery and alternately connected at their other end to opposite ends of the hub, said attachment comprising an elongated flexible member of circular cross-section for insertion between all of said spokes and around said hub, said member having a length and cross-sectional diameter such that when the member is disposed inside of said spokes, its meet and, along its length, it contacts an inside portion of each of said spokes, means for coupling together the ends of said member and a narrow reflective surface in the form of a spiral on the outer surface of and along the length of the elongated member. This reflective surface is conveniently and inexpensively provided in the form of a narrow strip of material or tape having a reflective outer surface and adhesive inner surface wherein the tape is wound in spiral fashion on the bonded to the outer surface and along the length of the elongated member. The pitch of the reflective material is such that when a wheel carrying the elongated member is rotated at the lowest reasonable speed, the elongated member appears to an observer to have its entire outer surface covered with reflective material.

In order that the invention may be fully understood, it will now be described with reference to the accompanying drawings, wherein like numerals refer to like parts throughout, and in which:

Figure 1 is a fragmentary view in side elevation of a spoke wheel having inserted between its spokes an elongated member constructed in accordance with the invention;

Figure 2 is a cross-sectional view taken in line 2—2 of Figure 1;

Figure 3 is an enlarged fragmentary cross-sectional view through a rim, tire, and spokes, showing an elongated member constructed in accordance with the invention assembled therewith; and

Figure 4 is an enlarged fragmentary side sectional view of a spoke wheel and elongated member removably closed on itself with a plug and mounted in a wheel.

The present invention is especially useful with bicycles of the conventional type which includes a frame, front forks mounted upon the hub of a front wheel, the front forks being pivotally mounted with respect to the frame and adapted to be steered by handle bars. Rear fork members converge at the rear end and are connected to the hub of a rear wheel. The rear wheel hub carries a small sprocket which is connected by a drive chain to a large pedal sprocket. Mounted for rotation with the large sprocket are oppositely extending crank arms carrying pedals. A seat for the rider is carried by the frame. Depending upon the type of construction, a conventional type of coaster brake may be provided in the rear hub, or caliper type brakes actuated from the handle bar may be provided on either or both of the wheels.

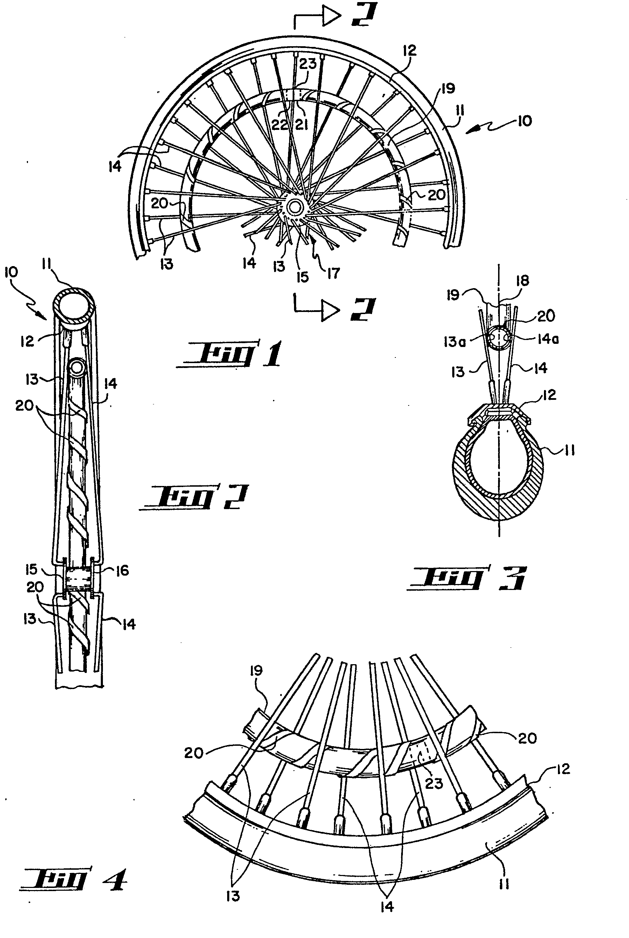

Directing attention now to the wheels, Figure 1 and Figure 2 illustrate by way of example a portion of a spoke wheel designated generally by the numeral 10 for bicycles and the like comprising a pneumatic tire 11, a rim 12, and spokes 13 and 14. As is well-known, the spokes 13 and 14 are alternately secured to opposite ends 15 and 16 of an axially elongated hub 17. In other words, the spokes 13 are attached to the near end 15 of the hub 17 of the wheel 10 as shown in Figure 1 (the left end in Figure 2) and define a cone surface converging outwardly of Figure 1 (and to the left in Figure 2) whereas the spokes 14 extend to the other end 16 (now shown in Figure 1) of the hub and define a second cone surface on the other side of the wheel (and extending to the right in Figure 2). As may best be seen in Figure 2 and Figure 3, the spokes 13 and 14 slope in opposite directions from a plane 18 (see Figure 3) passing through the center of the rim and halfway between the ends of the hub.

An attachment in accordance with the invention preferably comprising an elongated member 19 is shown in Figures 1, 2 and 3 inserted between the spokes 13 and 14. The member 19 may comprise a flexible tubular length of extruded plastic material circular in cross-section and of a size to engage, when mounted within the wheel, the inner portions 13a and 14a of the spokes intermediate their ends (see Figures 2 and 3) adjacent the rim as shown in Figure 3. While the elongated member 19 may be formed of a number of flexible materials, including rubber, conventional synthetic plastics materials are preferred because of their low cost and the ease with which they may be formed as by extrusion. Thus, the material used to form the member 19 may be of any desirable substance, for example polyethylene, vinyl chloride, cellulose acetate butyrate and the like.

In accordance with the present invention, it is not necessary that the elongated member 19 have or be provided with a light reflective outer surface. If desired, the elongated member may be formed of a suitable plastic material mixed with a fluorescent dye. However, the principal light reflective characteristic of an elongated member in accordance with the present invention is simply and more economically provided by providing a narrow strip of material 20 having a reflective outer surface wound in spiral fashion as shown in Figure 1 on the outer surface and along the length of the elongated member 19. Such a reflective strip of material may be, for example, Scotchlite brand or, preferably, helmet tape reflective adhesive tape manufactured and sold by the Minnesota Mining and Manufacturing Company (3M) of St. Paul, Minnesota. Such type having a width of about 0.63 cm and wound with a pitch of about 5.08 cm on a tubular member having an outside diameter of about 1.26 cm has been found satisfactory. When a tubular member with a non-reflective outer surface is provided with such reflective tape and is mounted on a conventional bicycle wheel, the entire outer surface of the tubular member appears to be light reflective when rotated to provide a speed of about 5.60 km/h. If the pitch is increased to 10.16 cm, the entire outer surface does not appear reflective until a speed of about 9.65 km/h is reached.

The diameter of the elongated member should not be less than about 1.26 cm to insure that it will contact the spokes. Similarly, a pitch of about 5.08 cm insures maximum visibility at the lowest reasonable speed or revolutions per minute for the lowest manufacturing cost. A reduction in the pitch of the reflective tape provides little, if any, significant visibility with an increase in manufacturing costs, while an increase in the pitch results in an undesirably significant reduction in visibility with only a small decrease in manufacturing costs.

As may now be seen, an elongated member 19 provided with specially wound reflective tape as described above, when mounted on a wheel appears to have its entire outer surface provided with reflective material when moving at a low rate of speed, thereby greatly reducing the cost of manufacturing a reflective member in accordance with the invention without any reduction in its visibility as compared to such an elongated member whose entire outer surface is reflective.

The elongated member is attached to the wheel by inserting one end 21 between the spokes 13 and 14 and threading it between the succeeding spokes until it has been threaded between all of the spokes on the wheel. If the elongated member is to be held securely, it is then pressed toward the rim so that it engages the inner portion of all the spokes as shown, for example, in Figure 3. If the tubular member has a constant or uniform cross-section along its length, it will be spaced substantially uniformly, from the rim as shown for example in Figure 1. The excess portion of the member is then cut off (where the member has a length greater than that necessary for its ends to meet or close on themselves for any particular size of wheel) and the ends 21 and 22 securely joined as for example by a plug 23 (see Figure 1).

As will now be apparent, while a member 19 mounted in a wheel as shown and described herein needs no separate attaching means for purposes of retention, it is still totally insensitive to rotation or vibration of the wheel. In fact, even if the end connecting means is lost, it is virtually impossible for member 19 to come out of the wheel.

The relatively close spacing of the spokes and their slope in opposite directions is utilized to retain the member thereby obviating any necessity for separate clamping or securing means. This greatly reduces the cost of manufacture and packing, eliminates the possibility of such means (including the member itself) from being lost and permits even the youngest of bicycle riders to mount the device on his or her bicycle. Further, where the elongated member is formed of nonreflective material, but provided with a reflective tape 20 as disclosed above, the cost of manufacture is further reduced.

The elongated member may, of course, be of such length as to fit precisely a given wheel. However, to permit the elongated members to be made in an economical manner and so that they may be adjusted to spoke wheels of different diameters, the member is preferably made of a length to at least close on itself when inserted in the largest stock size wheel. Thus, one or more indicator lines may be provided designating the proper size for given wheels of smaller diameter. Generally, at the present time, there are three sizes of bicycle wheels, so that two indicator lines are adequate for most purposes. It will be understoof, of course, that less or more than two lines may be employed for greater flexibility as to size and type of wheel.

While less preferable, the elongated member 19 maybe solid. A light-weight hollow member is preferred for reasons of economy, manufacture and shipping and to make it easier to be mounted in a wheel. The member may be one color or different colors, the colors being preferably iridescent. Further, it maybe of round, square or wedge shape cross-section. The member may be distributed either in coils or in predetermined length, preferably approximately twice that of the circumference of the largest size wheel. Further, the members when formed may include a suitable fluorescent dye to increase its visibility both during the day and at night.

While the elongated member per se may be rendered fluorescent for purpose of maximum visibility, it acquires its principal light reflective characteristics by reason of the spirally wound reflective tape 20. This is achieved when the reflective surface of the tape 20 is formed of material that reflects at least a substantial portion of any light incident upon it as, for example, minute reflective beads as used in the aforementioned helmet type reflective tape.

Since the outer surface of the member 19 and, hence, tape 20 carried thereby is curved in all directions, it will be understood that light coming from substantially any direction will be reflected by the tape 20, thereby rendering a bicycle or the like equipped with such a member easily visible from substantially any direction. Further, with enhanced visibility at even a low number of turns per minute, the entire outer surface of the elongated member will appear to be reflective to an observer due to inherent characteristics of the eye and on which the present invention is based.

If visibility is desired from both directly behind and forward of a bicycle utilizing the member, this may be accomplished by providing the member with a diameter greater than that of the tire. This is possible since the hub is always considerably longer that the diameter of the tire. When a member of such diameter is mounted on a wheel, a portion of it will extend out past the tire on each side.

For increased visibility or where it is desired that light be emitted rather than reflected, the member 19 may be either solid or hollow and made of light transmitting or conducting material such as, for example, Plexiglass, lucite or flexible light conducting plastic or the like. In this case, an electric lamp carried by the frame or fork as the case my be is disposed so that the bulb is spaced a short distance from the member 19 such that as the wheel turns, the member 19 continually passes through the light emitted by the bulb. The member 19 in this case is provided, for example, with continuous or spaced portions for receiving light from the bulb and/or emitting light. As these portions pass the bulb, light will be received from the bulb at the light receiving portions, transmitted around through the interior of member 19 and then emitted at the light emitting portions. Thus, such a member 19 may be notched or grooved for this purpose, or alternately, provided with suitable light receiving portions and the outer surface of the member 19 scratched or appropriately processed at those points or regions where it is desired that light be emitted. In fact, while the light source is essentially a small and fixed point source, the member 19 may, if desired, be made to appear as a continous or discontinuous illuminated member.

Further, to increase visibility, the member may be provided with a varying cross-section to cause it when mounted in a wheel to be eccentric with respect to the hub of the wheel.

As will now be evident, an elongated member having a reflective outer surface is not only decorative when attached to a spoke wheel as described herein, but is of particular additional value from a safety point of view. Such a device does not in any way affect servicing or use of a wheel to which it is attached. Thus, the tire may be inflated or repaired, the wheel removed or attached to the frame, the wheel padlocked, the spokes adjusted, or the wheel trued with the member in place. It is virtually unbreakable, no tools are required for its installation and particularly its retention; it is easily adaptable to fit any size wheel, may be installed by anyone old enough to ride a bicycle, does not tend to collect dirt, oil and the like, and when it does get dirty, it may be cleaned by simply wiping it with a cloth.

In addition to all of the above advantages, it is inexpensive to manufacture and purchase, and it provides virtually the greatest possible degree of visibility from substantially any direction.

The member 19 may be either solid or hollow and made of light transmitting or conducting material such as methyl methacrylate and acrylate synthetic resins or thermoplastic transparent acrylic synthetic resin, respectively.

The various features and advantages of the invention are thought to be clear from the foregoing description. Various other features and advantages not specifically enumerated will undoubtedly occur to those versed in the art, as likewise will many variations and modifications of the preferred embodiment illustrated, all of which may be achieved without departing from the spirit and scope of the invention as defined by the following claims.

## Claims

1. An attachment for vehicle spoke wheels (10) of the type having a central elongated hub (17), a rim (12) adapted to receive a tire (11), and spokes (13) (14) all connected at one end of the rim (12) around its periphery and alternately connected at their other end to opposite ends of the hub (17) having an elongated flexible member (19) for insertion between all of said spokes (13, 14) and around said hub (17), said member (19) being of a length and cross-section such that when disposed inside of said spokes (13, 14) its ends (21, 22) will meet and along its length it contacts an inside portion of each of said spokes (13, 14) and having means for coupling together the ends (21, 22) of said member (19), characterized by the fact that a strip (20) of material having a reflective outer surface is wound in spiral fashion along the length of and carried by the outer surface of said elongated member (19), the turns of said spirally wound strip (20) being spaced a substantial distance one from another, the distance between turns of said spirally wound strip is not substantially less than the maximum distance between turns operative to cause the entire outer surface of said elongated member (19) to appear to be covered with the reflective materials of said strip (20) when a wheel (10) carrying said elongated member (19) is rotated at a rate corresponding to a vehicle speed of 5.6 km/h.

2. The attachment of Claim 1 characterized by the fact that said tubular member (19) is formed of a light conducting material and is provided with at least one light receiving portion for receiving light from a light source and at least one light transmitting portion whereby light received by said light receiving portion is conducted through said member and transmitted therefrom at said light transmitting portion.

3. The attachment of Claim 1 characterized by the fact that said tubular member (19) includes prisms or lenses on its outer surface whereby when said member (19) is exposed to a source of light, it reflects light and renders it highly visible to the human eye.

4. The attachment according to Claim 2 characterized by the fact that the elongated member (19) is formed of a material including a fluorescent dye material and the reflective outer material of said strip of material is formed of small closely spaced light reflective particles whereby when said particles are exposed to a source of light, said particles provide the principal light reflecting characteristics of said attachment.

## Revendications

1. Accessoire de sécurité décoratif pour roues à rayons (10) de véhicule composées d'un moyeu (17) central allongé, d'une jante (12) conçue pour recevoir un pneu (11), et de rayons (13, 14), tous les rayons fixés par une extrémité au pourtour de la jante (12) et, par l'autre extrémité, alternativement aux extrémités opposées du moyeu (17). Cet accessoire executé comme un corps (19) allongé et flexible destiné à être inséré entre les rayons (13, 14) autour du moyeu (17) et avec une longueur et un diamètre du corps (19) inséré est en contact avec la côte intérieure des rayons (13, 14), est de toute sa longueur en contact avec la côte interieure des rayons (13, 14) tel que les bouts (21, 22) se rencontrent. Le corps mentionné pourvue d'un moyen d'union des bouts de se corps. Cet accessoir étant caractérisé par le fait q'une bande (20) d'un matière ayant une face extérieure réfléchissante est enroulée en spirale autour du corps (19) et est supportée par le corpse allongé (19); qu'entre les spires de la bande enroulée en spiral est une distance substantielle; que cette distance entre les spires de la bande enroulée en spiral est substantiellement ne pas moins de la distance maximum entre les spires opératives pour causer la face extérieure total du corpse allongé (19) à être couverte avec la matière refléchissante de la bande (20) en cas d'un rotation de la roues (10) — cette roue pourvue avec le corps (19) allongé

— avec une vitesse de véhicule de 5.6 km/h.

2. Accessoire selon revendication 1, caractérisé par le fait que le corps tubulaire (19) est en matière conduisant la lumière et comporte au moins une partie réceptrice destinée à recevoir la lumière emise par une source lumineuse et au moins une partie émettrice destinée à réémettre la lumière, ce qui la lumière reçue par la partie récuptrice est conduite par le corps (19) est réémise par la partie émettrice.

3. Accessoire selon revendication 1, caractérisé par le fait que le corps tubulaire (19) comporte à sa surface des prismes ou des lentilles qui — en recevant la lumière d'une source lumineuse — réfléchissent la lumière et le rendent très visible par l'oeil humain.

4. Accessoire selon revendication 2, caractérisé par le fait que le corps allongé (19) est fabriqué d'une matière contenant un colorant fluorescent et la matière extérieur de cette bande est fabriquée comme petites particules réfléchissante disposées avec une petite distance entre elles, ce qui, en recevant la lumière d'une source lumineuse, cette particules, prend une teinte brillante et rend l'accessoire très visible.

**Patentansprüche**

1. Einrichtung an Fahrzeugspeichenrädern (10) mit einer zentralen Nabe (17), einer Felge (12) zur Aufnahme eines Reifens (11) und der Speichen (13,14), die seitlich mit einem Ende am Umfang der Felge (12) und abwechselnd mit ihren anderen Enden an gegenüberliegenden Rändern der Nabe (14) befestigt sind, und die ein langgestrecktes, flexibles Element (19) zum Einsetzen zwischen die Speichen (13,14) um die Nabe (17) herum aufweist, wobei Länge und Querschnitt des Elements (19) so bemessen sind, daß das Element die Speicheninnenseiten berührt und seine Enden, mittels eines Kuppelelementes verbindbar, aneinanderstoßen, dadurch gekennzeichnet, daß ein Streifen eines Werkstoffs mit reflektierender Außenfläche spiralförmig um die Länge des langgestreckten Elements (19) von dessen Außenfläche getragen, gewunden ist, die Windungen des spiralförmig gewundenen Streifens (20) weisen dabei einen Abstand auf, als der maximale Abstand zwischen den Windungen, der die gesamte Außenfläche des langestreckten Elements (19) als mit reflektierendem Werkstoff bedeckt erscheinen ließe, wenn ein Rad (10), das dies langgestreckte Element (19) trägt, mit einer Drehzahl rotiert, die einer Fahrzeuggeschwindigkeit von 5,6 km/h entspricht.

2. Einrichtung nach Anspruch 1 dadurch gekennzeichnet, daß das langgestreckte Element (19) aus lichtleitendem Werkstoff geformt ist und mit mindestens einem lichtaufnehmenden Abschnitt zur Lichtaufnahme von einer Lichtquelle und einem lichtausstrahlendem Abschnitt ausgestattet ist, wobei Licht, aufgenommen von dem lichtaufnehmenden Abschnitt, durch das langgestreckte Element (19) und von dort durch den Lichtausstrahlabschnitt ausgestrahlt wird.

3. Einrichtung nach Anspruch 1, dadurch gekennzeichnet, daß das langgestreckte Element (19) auf seiner Außenfläche Prismen oder Linsen aufweist, die, wenn die Außenfläche einer Lichtquelle ausgesetzt ist, Licht reflektieren und es dem menschlichen Auge in erhöhtem Maße sichtbar machen.

4. Einrichtung nach Anspruch 2, dadurch gekennzeichnet, daß das langgestreckte Element (19) aus einem Werkstoff geformt ist, der fluoreszierendes, farbiges Material enthält, wobei das relektierende äußere Material des Materialstreifens die Form enganeinanderliegender lichtreflektierender Partikel aufweist, so daß diese Partikel, wenn sie einer Lichtquelle ausgesetzt sind, die Lichtreflexcharakteristiken der Einrichtung darstellen.

Fig 1

Fig 2

Fig 3

Fig 4